# EUROPÄISCHE PATENTSCHRIFT

(11) **EP 1 101 780 B1**
(45) Veröffentlichungstag und Bekanntmachung des Hinweises auf die Patenterteilung: **02.11.2011**
(21) Anmeldenummer: 00124211.4
(22) Anmeldetag: 09.11.2000
(51) Int. Cl.: C08F 279/02, C08G 18/63, C08L 51/04, C09D 151/04, C09D 175/04

(54) **Festkörperreiche Bindemittelkombinationen und deren Verwendung**
High solids binder combinations and the use thereof
Combinaisons de liants à haute teneur en solides et leur utilisation

(30) Priorität: 17.11.1999 DE 19955129
(43) Veröffentlichungstag der Anmeldung: 23.05.2001
(73) Patentinhaber: Bayer MaterialScience AG, 51368 Leverkusen (DE)
(72) Erfinder: Wamprecht, Christian, Dr., 41472 Neuss (DE); Sonntag, Michael, Dr., 51519 Odenthal (DE); Mundstock, Holger, 42929 Wermelskirchen (DE)

(56) Entgegenhaltungen:
- EP-A- 0 279 311
- EP-A- 0 778 298
- EP-A- 0 819 710

## Beschreibung

Die vorliegende Erfindung betrifft Bindemittelkombinationen aus Polyacrylatpolyolen und Vernetzern und deren Verwendung zur Herstellung von Überzügen.

Durch Kombination der erfindungswesentlichen, OH-funktionellen Bindemittelkomponenten mit Polyisocyanaten werden festkörperreiche Bindemittelkombinationen erhalten, die zu hochwertigen Beschichtungen ausgehärtet werden können. Neben hervorragender Filmoptik sowie hoher Lösemittel- und Chemikalienbeständigkeit weisen diese Überzüge bei Raumtemperatur eine sehr schnelle physikalische Trocknung und chemische Vernetzung sowie eine gute Oberflächenhärte auf.

Der Vorteil von festkörperreichen Polyacrylatharzen ist in der Verringerung der Emission organischer Verbindungen, vorzugsweise Lösemittel, bei Applikation des Lackes zu sehen. Um diese festkörperreichen Lackformulierungen zu erhalten, müssen entsprechende Polyacrylatharze mit niedrigen Viskositäten, d. h. geringen Molmassen, eingesetzt werden.

Es ist bekannt, dass zur Herstellung niedrigviskoser Polymerisate die radikalische Lösungsmittelpolymerisation eingesetzt werden kann (z.B. EP-A 408 858, EP-A 398 387, US-A 4 145 513). Zum Teil nachteilig ist dabei, dass die Eigenschaften der Polymerisate durch den Einsatz beträchtlicher Mengen Polymerisationsregler sowie deren Folgeprodukte beeinträchtigt werden. Insbesondere können die als Polymerisationsregler eingesetzten Thiole übel riechen oder sogar giftig sein. In den EP-A 225 808, EP-A 225 809 und EP-A 778 298 werden daher α-Olefine wie z.B. 1-Octen oder 1-Decen, die keinen unangenehmen Geruch besitzen, als Regler verwendet. 2K-PUR-Lacke auf Basis der Polyacrylatharze gemäß EP-A 225 809 und aliphatischer Lackpolyisocyanate haben jedoch eine zu langsame physikalische Trocknung um, z.B. für die Anwendung in der Autoreparatur- und Großfahrzeuglackierung eingesetzt zu werden. Auch die Trocknung von 2K-PUR-Lacken gemäß der EP-A 778 298 genügt heutigen Anforderungen in dieser Hinsicht nicht mehr vollständig und ist daher verbesserungsbedürftig.

Die EP-A 635 523 und EP-A 638 591 beschreiben festkörperreiche Polyacrylatharze, die durch Substanzpolymerisation hergestellt und danach mit einem geeigneten Lösemittel verdünnt werden.

Die EP-A 635 523 beschreibt den aus der Lösemittelpolymerisation bekannten Effekt der Herstellung von unimodal eng verteilten, festkörperreichen Polyacrylatharzen bei Verwendung von tert.-Amylgruppen aufweisenden Peroxiden, jedoch übertragen auf die Substanzpolymerisation. Wie erwartet konnte nachgewiesen werden, dass mit tert.-Amylgruppen aufweisenden Peroxiden niedrigviskosere Polyacrylatharze erhalten werden als mit tert.-Butylgruppen aufweisenden Peroxiden. Die Vorteile dieser Substanzpolymerisation gegenüber der Lösemittelpolymerisation sind jedoch nicht eindeutig zu erkennen, weil entsprechende Vergleichsversuche fehlen. In der Praxis hat die Substanzpolymerisation gegenüber der Lösemittelpolymerisation eher Nachteile, was insbesondere die Abführung der Reaktionswärme betrifft. Die in den Beispielen hergestellten Polyacrylatharze weisen bei einem Festgehalt von 70 Gew.-% Viskositäten bei 23°C zwischen 2.790 und 9.130 mPa.s auf, liegen damit eher im medium- statt im high-solids-Bereich und genügen daher heutigen Anforderungen an festkörperreiche Lacke nicht mehr.

Die EP-A 171 847 und die EP-A 638 591 beschreiben festkörperreiche Copolymerisate, die durch Verwendung von (Meth)Acrylatmonomeren mit sterisch anspruchsvollen (Cyclo)Alkylresten eine relativ niedrige Viskosität bei hohem Festgehalt besitzen. Die Lösemittel- und Chemikalienbeständigkeit solcher Copolymerisate genügt jedoch den heutigen Anforderungen an hochbeständige Autoreparaturlacke nicht mehr vollständig. Bei der Herstellung der Copolymerisate gemäß EP-A 638 591 durch Substanzpolymerisation wird in allen aufgeführten Beispielen ein Monoepoxid (Cardura^{®} E 10) als Reaktionsmedium vorgelegt. Dieses Monoepoxid reagiert während der Polymerisation mit der zudosierten (Meth)Acrylsäure ab und wird somit in das Polyacrylat eingebaut. Durch diese Reaktion entstehen überwiegend sekundär gebundene Hydroxylgruppen, die neben den durch hydroxyfunktionelle Monomere eingeführten primären Hydroxylgruppen (Hydroxyethylmethacrylat) oder sekundären Hydroxylgruppen (Hydroxypropylmethacrylat) für die Reaktion mit dem als Vernetzer dienenden Polyisocyanat zur Verfügung stehen.

Aus der EP-A 0 819 710 sind Bindemittelkombinationen bestehend aus OH-funktionellen Propfcopolymerisaten und mehrfach funktionellen Vernetzerharzen bekannt. Die OH-funktionellen Pfropfcopolymerisate enthalten neben 5 bis 30 Gew.-Teile eines alpha-Olefins mit 8 bis 16 Kohlenstoffatomen, 0,1 bis 35 Gew.-Teile mindestens eines Glycidylesters einer alpha-Alkylalkancarbonsäure mit 4 bis 30 Kohlenstoffatomen. Diese Glycidylester dienen unter anderem als Reaktionsmedium für die Durchführung der radikalischen Polymerisation und werden durch Addition der Epoxidgruppe an die Carbonsäuregruppen der als Monomere mitverwendeten (Meth)Acrylsäure unter Ausbildung von sekundären OH-Gruppen in das Polymer eingebaut.

Sekundäre Hydroxylgruppen haben jedoch gegenüber Polyisocyanaten eine deutlich geringere Reaktivität als primäre Hydroxylgruppen. Daher erreichen 2K-PUR-Lacke, die bei niedrigen Temperaturen ausgehärtet werden, (Autoreparatur- und Großfahrzeuglackierung, Holzlackierung), auf Basis von Polyacrylatharzen mit überwiegend sekundär gebundenen Hydroxylgruppen erst nach etlichen Tagen eine ausreichende Vernetzungsdichte und damit verbunden eine zufriedenstellende Lösemittelbeständigkeit. Gerade bei der Autoreparatur- und Großfahrzeuglackierung ist jedoch neben einer schnellen physikalischen Trocknung auch eine rasche chemische Vernetzung dringend notwendig, um so einen möglichst schnellen Einsatz des Fahrzeuges wieder zu ermöglichen.

Es ist daher die Aufgabe der Erfindung, neue Bindemittelkombinationen auf Basis hydroxyfunktioneller Copolymerisate und (cyclo)aliphatischer Lackpolyisocyanate bereitzustellen, die hochfestkörperreiche Lacke liefern, welche neben einer schnellen physikalischen Trocknung auch eine rasche chemische Vernetzung zeigen. Im Gegensatz zu Beschichtungen mit Lacken des Standes der Technik sollen mit den neuen festkörperreichen Lacken hochwertige Beschichtungen erzielt werden, die nach einer kurzen Härtungszeit eine ausgezeichnete Lösemittelfestigkeit aufweisen und damit die rasche Gebrauchsfähigkeit des Fahrzeuges z.B. nach der Reparatur ermöglichen.

Es wurde nun überraschend gefunden, dass Lacke auf Basis von Bindemittelkombinationen aus speziellen Pfropfcopolymerisaten und Polyisocyanaten einen sehr hohen Festkörpergehalt im verarbeitungsfertigen Zustand besitzen. Diese Lacke liefern Beschichtungen, die bei Raumtemperatur (23°C) eine sehr schnelle physikalische Trocknung und eine rasche chemische Vernetzung, d.h. eine ausgezeichnete Lösemittelfestigkeit nach nur 1 bis 2 Tagen besitzen. Das sehr gute Gesamteigenschaftsprofil der erhaltenen Lackfilme wie Härte, Elastizität, Lösemittel-, Chemikalien- und Wetterbeständigkeit gestattet den Einsatz in der Fahrzeuglackierung, vorzugsweise in der Autoreparatur- und Großfahrzeuglackierung. Weitere Anwendungsgebiete liegen in den Bereichen allgemeine Industrielackierung, Korrosionsschutz sowie Holz- und Möbellackierung, wobei auch andere Vernetzerharze als Polyisocyanate Verwendung finden können.

Gegenstand der Erfindung sind Bindemittelkombinationen bestehend aus
A) 90 bis 50 Gew.-% OH-funktioneller Pfropfcopolymerisatharze mit einem Hydroxyl gruppengehalt von 1,07 bis 8,51 Gew.-%, hergestellt durch Copolymerisation von
   a) 0,1 bis 10 Gew.-% mindestens eines gegebenenfalls funktionellen Polybutadiens mit einem Molekulargewicht von 500 bis 10.000 und mit mindestens 20 % 1,2-Vinylstruktur,
   b) 5 bis 60 Gew.-% mindestens eines ungesättigten, aromatischen Monomeren,
   c) 10 bis 50 Gew.-% mindestens eines Hydroxyalkylesters der Acrylund/oder Methacrylsäure mit 2 bis 4 C-Atomen im Hydroxyalkylrest und primär gebundener Hydroxylgruppe,
   d) 5 bis 70 Gew.-% mindestens eines cycloaliphatischen Esters der Acryl- und/oder Methacrylsäure mit bis zu 12 C-Atomen im Cycloalkylrest,
   e) 5 bis 50 Gew.-% mindesten eines aliphatischen Esters der Acrylund/oder Methacrylsäure mit 1 bis 8 C-Atomen in der Alkoholkomponente,
   f) 0,1 bis 5 Gew.-% mindestens einer α,β-monoolefinisch ungesättigten Mono- oder Dicarbonsäure mit 3 bis 7 C-Atomen und/oder mindestens eines Maleinsäure- bzw. Fumarsäurehalbesters mit 1 bis 14 C-Atomen im Alkoholrest und
   g) 0 bis 40 Gew.-% weiteren copolymerisierbaren, olefinisch ungesättigten Verbindungen mit bis zu 10 Gew.-% Hydroxy-propylmethacrylat und
B) 10 bis 50 Gew.-%, vorzugsweise 10 bis 40 Gew.-% eines mehrfach funktionellen Vernetzers oder Vernetzergemischs,
wobei jeweils die Summe der Gew.-% der Komponenten A) und B) sowie die Summe der Gew.-% der Komponenten a) bis g) 100 beträgt.

Bevorzugt werden 90 bis 60 Gew.-% OH-funktioneller Pfropfcopolymerisatharze (A) verwendet, bei den ungesättigten, aromatischen Monomeren (b) handelt es sich beispielsweise um Styrol, α-Methylstyrol oder Vinyltoluol.

Erfindungsgemäß eignet sich eine Vielzahl mehrfach funktioneller Vernetzer wie zum Beispiel Aminoplastharze, wie alkoxylierte Melaminharze, Melamin-Formaldehyd-Kondensationsprodukte, Harnstoffharze, Guanidinharze, Phenolplastharze, Resolharze und bevorzugt, gegebenenfalls blockierte, polyfunktionelle Isocyanate, vorzugsweise oligomere Isocyanate mit Biuret-, Allophanat-, Uretdion-, Urethan- und/oder Isocyanurat- bzw. Iminooxadiazindionstruktur.

Gegenstand der Erfindung ist auch die Herstellung fertig formulierter Lacke aus den erfindungsgemäßen Bindemittelkombinationen und deren Verwendung zur Beschichtung von Oberflächen, insbesondere in der Fahrzeuglackierung zur Erslackierung von Fahrzeugen und Fahrzeugteilen sowie bevorzugt bei der Autoreparatur- und Großfahrzeuglackierung, in der allgemeinen Industrie-, Holz- und Möbellackierung sowie im Bereich Korrosionsschutz.

Die erfindungswesentlichen Pfropfcopolymerisate A) der erfindungsgemäßen Bindemittelkombinationen unterscheiden sich in ihrer chemischen Zusammensetzung ganz wesentlich sowohl von den Polyacrylatpolyolen der EP-A 225 809 und EP-A 778 298 als auch den Substanzcopolymerisaten der EP-A 635 523 und der EP-A 638 591. Bezüglich der lacktechnischen Eigenschaften, insbesondere der Trocknungsgeschwindigkeit und der Lösemittelbeständigkeit, ergeben sich Vorteile gegenüber den Produkten der genannten Dokumente, wie in entsprechenden Vergleichsbeispielen nachgewiesen wird.

Ähnliche, jedoch nicht identische Bindemittelkombinationen werden in der EP 279 311 beschrieben. Im übrigen sind die erfindungsgemäßen Bindemittelkombinationen insbesondere für ein Anwendungsgebiet bestimmt, welches in dem genannten älteren Dokument nicht angesprochen wird, weil die darin beschriebenen Lacke eine zu lange Trocknungszeit aufweisen und hochflexible Lackfilme einer zu geringen Härte liefern.

Die Herstellung der erfindungswesentlichen Pfropfcopolymerisatharze A) kann durch Copolymerisation der Bestandteile a) bis g) nach üblichen Verfahren erfolgen. Die radikalische Polymerisation in Lösung ist bevorzugt. Dabei werden bei Temperaturen von 140 bis 240°C in Gegenwart von Radikalbildnern monomere und oligomere Bausteine copolymerisiert.

Bevorzugt bestehen die Polyacrylatharze A) aus:
a) 0,2 bis 8 Gew.-% eines oder mehrerer, gegebenenfalls funktioneller, Polybutadiene mit einem Molekulargewicht von 500 bis 5.000 und mindestens 30 % 1,2-Vinylstruktur,
b) 10 bis 40 Gew.-% Styrol,
c) 15 bis 45 Gew.-% Hydroxyethylacrylat, Hydroxyethylmethacrylat, Butandiol-1,4-monoacrylat oder deren Mischungen,
d) 10 bis 50 Gew.-% mindestens eines cycloaliphatischen Esters der Acrylund/oder Methacrylsäure mit bis zu 12 C-Atomen in der Alkoholkomponente,
e) 10 bis 40 Gew.-% mindestens eines aliphatischen Esters der Acryl- und/oder Methacrylsäure mit 1 bis 8 C-Atomen in der Alkoholkomponente,
f) 0,3 bis 4 Gew.-% Acrylsäure, Methacrylsäure, Maleinsäure- bzw. Fumarsäurehalbester mit 1 bis 8 C-Atomen in der Alkoholkomponente oder deren Mischungen und
g) 0 bis 25 Gew.-% Acrylnitril, Methacrylnitril, Hydroxypropyl(meth)acrylat (bis 10 Gew.-%), Vinylester aliphatischer, gegebenenfalls verzweigter Moncarbonsäuren mit 1 bis 10 C-Atomen im Säurerest, Di(cyclo)-alkylester der Malein- und/oder Fumarsäure mit bis zu 8 C-Atomen im Alkoholrest oder deren Mischungen,
wobei die Summe der Gew.-% der Komponenten a) bis g ) 100 beträgt.

Besonders bevorzugt bestehen die Polyacrylatharze A) aus:
a) 0,3 bis 7,5 Gew.-% eines oder mehrerer, gegebenenfalls funktioneller, Polybutadiene mit einem Molekulargewicht von 500 bis 3.000 und mindestens 40% 1,2-Vinylstruktur,
b) 15 bis 35 Gew.-% Styrol,
c) 20 bis 40 Gew.-% Hydroxyethylacrylat, Hydroxyethylmethacrylat oder deren Mischungen,
d) 15 bis 45 Gew.-% Isobornylacrylat, Isobornylmethacrylat, Cyclohexyl-(meth)acrylat, 3,5,5-Trimethylcyclohexyl(meth)acrylat, 4-tert.-Butylcyclohexyl(meth)acrylat oder deren Mischungen,
e) 10 bis 40 Gew.-% mindestens eines aliphatischen Esters der Acryl- und/oder Methacrylsäure mit 1 bis 8 C-Atomen in der Alkoholkomponente,
f) 0,5 bis 3 Gew.-% Acrylsäure, Methacrylsäure oder deren Mischungen und
g) 0 bis 20 Gew.-% Hydroxypropyl(meth)acrylat (bis 10 Gew.-%), Vinylester aliphatischer, gegebenenfalls verzweigter Monocarbonsäuren mit 1 bis 10 C-Atomen im Säurerest, Di(cyclo)alkylester der Malein- und/oder Fumarsäure mit bis zu 8 C-Atomen im Alkoholrest oder deren Mischungen,
wobei die Summe der Gew.-% der Komponenten a) bis g) 100 beträgt.

Ganz besonders bevorzugt bestehen die Polyacrylatharze A) aus:
a) 0,4 bis 6 Gew.-% eines oder mehrerer, gegebenenfalls funktioneller, Polybutadiene mit einem Molekulargewicht von 500 bis 2.000 und mindestens 45 % 1,2-Vinylstruktur,
b) 15 bis 25 Gew.-% Styrol,
c) 25 bis 35 Gew.-% Hydroxyethylacrylat, Hydroxyethylmethacrylat oder deren Mischungen,
d) 20 bis 30 Gew.-% Isobornylacrylat,
e) 15 bis 25 Gew.-% mindestens eines aliphatischen Esters der Acryl- und/oder Methacrylsäure mit 1 bis 4 C-Atomen in der Alkoholkomponente,
f) 0,5 bis 2 Gew.-% Acrylsäure, Methacrylsäure oder deren Mischungen und
g) 0 bis 10 Gew.-% Hydroxypropyl(meth)acrylat (bis 5 Gew.-%), Vinylester aliphatischer, gegebenenfalls verzweigter Monocarbonsäuren mit 1 bis 9 C-Atomen im Säurerest, Di(cyclo)alkylester der Malein- und/oder Fumarsäure mit bis zu 6 C-Atomen im Alkoholrest oder deren Mischungen,
wobei die Summe der Gew.-% der Komponenten a) bis g) 100 beträgt.

Als Ausgangsmaterialien a) für die erfindungswesentlichen Pfropfcopolymerisate A) sind grundsätzlich alle Polybutadiene geeignet, die mindestens 20 % seitenständige 1,2-Vinyldoppelbindungen besitzen.

Es eignen sich bevorzugt Polybutadiene mit einem Gehalt an vinylischen Doppelbindungen von ≥ 30 %. Dabei kann der Rest an Doppelbindungen aus einem beliebigen Verhältnis von 1,4-cis- und 1,4-trans-Struktur bestehen. Auch Polybutadiene, die daneben noch Doppelbindungen in cyclischen Strukturen aufweisen sind als Komponente a) geeignet. Ein ganz besonders bevorzugtes Ausgangsmaterial ist ein Produkt mit ≥ 45 % 1,2-Vinyldoppelbindungen.

Im allgemeinen wird man Isomerengemische von Polybutadienen einsetzen, z.B. Polybutadiene, die 30 bis 90 % 1,2-vinylische Doppelbindungen, 10 bis 70 % Gemische von 1,4-cis und 1,4-trans-Doppelbindungen und 0 bis 30 % cyclische Anteile aufweisen. Weiterhin können die Polybutadiene gegebenenfalls funktionelle Gruppen tragen, z.B. Hydroxylgruppen, Carboxylgruppen etc.

Solche Polybutadiene mit unterschiedlicher Konfiguration sind bekannt, z.B. "Makromoleküle" von H. G. Elias, 4. Auflage, Hüthig und Wepf-Verlag, Basel, Heidelberg, New York, Seiten 676 sowie 744 bis 746 und 1012 ff.

Die Monomeren bzw. Oligomeren a) bis g) werden im allgemeinen in den gleichen Verhältnissen, wie sie zur Polymerisation eingesetzt werden, in das Pfropfcopolymerisat eingebaut. Die eingebauten Einheiten sind im wesentlichen statistisch verteilt.

Als Lösemittel bei der Herstellung der Komponente A) eignen sich z.B. aliphatische, cycloaliphatische und/oder aromatische Kohlenwasserstoffe, wie Alkylbenzole, z.B. Toluol, Xylol; Ester, wie Ethylacetat, n-Propylacetat, Isopropylacetat, n-Butylacetat, Acetate mit längeren Alkoholresten, Butylpropionat, Pentylpropionat, Ethylenglykolmonoethyletheracetat, das entsprechende Methyletheracetat; Ether, wie Ethylenglykolacetatmonomethyl-, -ethyl- oder -butylether; Ketone, wie Methylethylketon, Methylisobutylketon, Methyl-n-amylketon, gegebenenfalls Lactone oder dergleichen oder Gemische derartiger Lösemittel.

Die Herstellung der Pfropfcopolymerisate A) kann kontinuierlich oder diskontinuierlich erfolgen. Bei kontinuierlicher Herstellung wird in einen Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch durch diskontinuierliche Herstellung synthetisiert werden, bei der man die Monomermischung und den Initiator mit konstanter Geschwindigkeit in den Polymerisationsreaktor eindosiert, ohne das Polymerisat abzuführen.

Im allgemeinen erfolgt die Pfropfcopolymerisation im Temperaturbereich von 140 bis 240°C, vorzugsweise 160 bis 210°C und besonders bevorzugt 165 bis 200°C unter einem Druck von bis zu 25 bar. Die Initiatoren werden in Mengen von 0,05 bis 15 Gew.-%, vorzugsweise 1 bis 10 Gew.-%, insbesondere 2 bis 8 Gew.-%, bezogen auf die Gesamtmenge der Komponenten a) bis g), eingesetzt.

Geeignete Initiatoren zur Herstellung der Pfropfcopolymerisate A) sind übliche Radikalstarter auf Azo- oder Peroxidbasis, jedoch nur solche, die in dem oben genannten Temperaturbereich eine für die Polymerisation genügend lange Halbwertszeit von ca. 5 Sekunden bis ca. 30 Minuten besitzen. Geeignet sind beispielsweise 2,2'-Azobis-(2-methylpropannitril), 2,2'-Azobis-(2-methylbutannitril), 1,1'-Azobis(cyclohexancarbonitril), tert.-Butylperoxy-2-ethylhexanoat, tert.-Butylperoxydiethylacetat, tert.-Butylperoxyisobutyrat, 1,1-Di-tert.-butylperoxy-3,3,5-trimethylcyclohexan, 1,1-Di-tert.-butylperoxycyclohexan, tert.-Butylperoxy-3,5,5-trimethylhexanoat, tert.-Butylperoxyisopropylcarbonat, tert.-Butylperoxyacetat, tert.-Butylperoxybenzoat, Dicumylperoxid, tert.-Butylcumylperoxid, Di-tert.-butylperoxid und Di-tert.-amylperoxid.

Die erfindungswesentlichen Pfropfcopolymerisate A) stellen wertvolle Bindemittelkomponenten für die erfindungsgemäßen festkörperreichen Bindemittelkombinationen (Zweikomponenten-Lacke) dar. Unter "Zweikomponenten-Lacken" sind in diesem Zusammenhang sowohl "Eintopf-Systeme" als auch "Zweitopf-Systeme" zu verstehen. Da es sich bei den erfindungsgemäßen Polymerisatharzen um Bindemittelkomponenten für Zweikomponenten-Lacke handelt, enthalten die Lacke neben den erfindungsgemäßen Polymerisatharzen (und gegebenenfalls weiteren Polyhydroxylverbindungen und/oder aminischen Reaktivverdünnern) eine Härterkomponente. Falls es sich bei diesem Härter beispielsweise um ein Polyisocyanat mit freien Isocyanatgruppen handelt, können die gebrauchsfertigen Beschichtungsmittel erst kurz vor ihrer Verarbeitung durch Abmischen der Komponenten hergestellt werden. In einem solchen Fall würde es sich um ein "Zweitopf-System" handeln.

Falls es sich jedoch bei dem Härter um eine Verbindung handelt, die mit den erfindungsgemäßen Polymerisatharzen erst bei erhöhter Temperatur reagiert, beispielsweise um Polyisocyanate mit blockierten Isocyanatgruppen, kann der Härter auch bereits bei Raumtemperatur mit dem Polymerisatharz zu einem bei Raumtemperatur lagerfähigen "Eintopf-System" vereinigt werden.

Bei der erfindungsgemäßen Verwendung der erfindungswesentlichen Pfropfcopolymerisate A) werden diese gegebenenfalls in Abmischung mit anderen, aus der Polyurethanlacktechnologie bekannten, organischen Polyhydroxylverbindungen als Polyhydroxyl-Komponente und/oder in Abmischung mit aminischen Reaktivverdünnern eingesetzt. Bei diesen anderen Polyhydroxylverbindungen kann es sich um die üblichen Polyester-, Polyether-, Polycarbonat-, Polyurethan- oder Polyacrylatpolyole handeln. Vorzugsweise werden als weitere organische Polyhydroxylverbindungen, falls solche gegebenenfalls neben den erfindungswesentlichen Pfropfcopolymerisaten A) zum Einsatz gelangen, die an sich bekannten Polyacrylatpolyole und/oder Polyesterpolyole des Standes der Technik eingesetzt. Bei den aminischen Reaktivverdünnem kann es sich um Produkte mit blockierten Aminogruppen, wie z.B. Aldimine, Ketimine, Oxazolane oder um solche, die noch freie, jedoch in ihrer Reaktivität abgeschwächte Aminogruppen aufweisen, wie z.B. Asparaginsäureester, handeln. In aller Regel weisen die aminischen Reaktivverdünner mehr als eine (blockierte) Aminogruppe auf, so dass sie bei der Vernetzungsreaktion zum Aufbau des polymeren Lackfilmnetzwerkes beitragen.

Bei der erfindungsgemäßen Verwendung der erfindungswesentlichen Pfropfcopolymerisate A) können diese in Abmischung mit bis zu 70, vorzugsweise bis zu 50 Gew.-% an anderen Polyolen und/oder aminischen Reaktivverdünnern der beispielhaft genannten Art zum Einsatz gelangen. Besonders bevorzugt werden jedoch die erfindungswesentlichen Pfropfcopolymerisate als alleinige Polyolkomponente bei der erfindungsgemäßen Verwendung eingesetzt.

Der Hydroxylgruppengehalt der Pfropfcopolymerisate A) liegt bei 1,07 bis 8,51 Gew.-%, vorzugsweise bei 1,77 bis 7,77 Gew.-%, besonders bevorzugt bei 2,62 bis 7,04 Gew.-% und ganz besonders bevorzugt bei 3,27 bis 6,31 Gew.-%.

Als Reaktionskomponente B) für die erfindungswesentlichen hydroxylhaltigen Pfropfcopolymerisatharze A) zur Herstellung der erfindungsgemäßen Bindemittelkombinationen für Überzüge und Beschichtungen kommen Vernetzungsreagentien in Betracht, die durch chemische Reaktionen mit den Hydroxylgruppen der Pfropfcopolymerisatharze zu einer Aushärtung der erfindungsgemäßen Überzüge führen, wie blockierte oder unblockierte Polyisocyanate, Aminoplastharze, z.B. entsprechende Melamin-Derivate, wie alkoxylierte Melaminharze oder Melamin-Formaldehyd-Kondensationsprodukte (z.B. FR-A 943 411, von D. H. Salomon in "The Chemistry ofOrganic Filmformers", Seiten 235 - 240, John Wiley & Sons, Inc., New York, 1974) und übliche Vernetzungsmittel, z.B. mit alkoholischen Hydroxylgruppen reaktionsfähige Epoxide, Carbonsäureanhydride, Phenolplastharze, Resolharze, Harnstoffharze oder Guanidinharze bzw. deren Gemische.

Als bevorzugte Reaktionskomponente B) für die erfindungswesentlichen Pfropfcopolymerisate A) zur Herstellung der erfindungsgemäßen Bindemittelkombinationen für Überzüge und Beschichtungen kommen in Frage marktübliche, gegebenenfalls blockierte, Lackpolyisocyanate, das heißt vor allem die bekannten Urethangruppen, Uretdiongruppen, Allophanatgruppen und insbesondere Biuretgruppen, Isocyanuratgruppen und Iminooxadiazindiongruppen aufweisenden Modifizierungsprodukte von einfachen Diisocyanaten, wie z.B. 1,6-Diisocyanatohexan, 1-Isocyanato-3,3,5-trimethyl-5-isocyanatomethylcyclohexan (Isophorondiisocyanat), 4,4'-Diisocyanatodicyclohexylmethan, 1,4-Diisocyanatocyclohexan, 1-Methyl-2,4-diisocyanatocyclohexan und seine Gemische mit bis zu 35 Gew.-%, bezogen auf Gesamtgemisch, an 1-Methyl-2,6-diisocyanatocyclohexan; 2,4-Diisocyanatotoluol und seine Gemische mit bis zu 35 Gew.-%, bezogen auf Gesamtgemisch, an 2,6-Diisocyanatotoluol oder deren Gemische. Besonders bevorzugt werden die entsprechenden "Lackpolyisocyanate" mit aliphatisch und/oder cycloaliphatisch gebundenen, freien Isocyanatgruppen eingesetzt. Ein weiteres geeignetes Polyisocyanat, das nicht die oben aufgeführten Gruppierungen enthält, ist 4-Isocyanatomethyl-1,8-octandiisocyanat. Geeignete Blockierungsmittel für gegebenenfalls zum Einsatz kommende blockierte Polyisocyanate sind z.B. ε-Caprolactam, Butanonoxim, Triazol, Phenol bzw. Phenolderivate, sekundäre Amine, Malonsäurealkylester etc..

Zu den Urethangruppen aufweisenden "Lackpolyisocyanaten" gehören z.B. die Umsetzungsprodukte von 2,4- und gegebenenfalls 2,6-Diisocyanatotoluol oder 1-Methyl-2,4- und gegebenenfalls 1-Methyl-2,6-diisocyanatocyclohexan mit unterschüssigen Mengen an Trimethylolpropan, bzw. dessen Gemischen mit einfachen Diolen, wie z.B. den isomeren Propan- oder Butandiolen. Die Herstellung derartiger, Urethangruppen aufweisender Lackpolyisocyanate in praktisch monomerfreier Form ist beispielsweise in der DE-A 1 090 196 beschrieben.

Zu den Biuretgruppen aufweisenden Lackpolyisocyanaten, die bei der erfindungsgemäßen Verwendung besonders bevorzugt sind, gehören insbesondere jene auf Basis von 1,6-Diisocyanatohexan, deren Herstellung beispielsweise in EP-A 0 003 505, DE-A 1 101 394, US-A 3 358 010 oder US-A 3 903 127 beschrieben ist.

Zu den ebenfalls besonders bevorzugten, Isocyanuratgruppen aufweisenden, Lackpolyisocyanaten gehören insbesondere die Trimerisate bzw. Mischtrimerisate der oben beispielhaft genannten Diisocyanate, wie z.B. die Isocyanuratgruppen aufweisenden Polyisocyanate auf Basis Diisocyanatotoluol gemäß GB-A 1 060 430, GB-A 1 506 373 oder GB-A 1 485 564, die Mischtrimerisate von Diisocyanatotoluol mit 1,6-Diisocyanatohexan, die beispielsweise gemäß DE-A 1 644 809 oder DE-A 3 144 672 zugänglich sind und insbesondere die aliphatischen, die aliphatischcycloaliphatischen und die cycloaliphatischen Trimerisate bzw. Mischtrimerisate auf Basis von 1,6-Diisocyanatohexan und/oder Isophorondiisocyanat, die beispielsweise gemäß US-A 4 324 879, US-A 4 288 586, DE-A 3 100 262, DE-A 3 100 263, DE-A 3 033 860 oder DE-A 3 144 672 erhältlich sind. Die bei der erfindungsgemäßen Verwendung zum Einsatz gelangenden Lackpolyisocyanate weisen im allgemeinen einen Isocyanatgehalt von 5 bis 25 Gew.-%, eine mittlere NCO-Funktionalität von 2,0 bis 5,0, vorzugsweise 2,8 bis 4,0 und einen Restgehalt an, zu ihrer Herstellung eingesetzten, monomeren Diisocyanaten von unter 2 Gew.-%, vorzugsweise unter 0,5 Gew.-% auf. Selbstverständlich können auch beliebige Gemische der beispielhaft genannten Lackpolyisocyanate zum Einsatz gelangen.

In den bei der erfindungsgemäßen Verwendung zum Einsatz gelangenden, festkörperreichen Zweikomponenten-Polyurethanlacken liegen die Polyolkomponente und die Polyisocyanatkomponente in einem Äquivalentverhältnis von Isocyanatgruppen zu Hydroxylgruppen von 5 : 1 bis 1 : 2, vorzugsweise 3 : 1 bis 1 : 1,5 und besonders bevorzugt 1,5 : 1 bis 1 : 1,2 entsprechenden Mengen vor. Die durch Vermischen der beiden Komponenten erhaltenen Zweikomponenten-Beschichtungsmittel haben nur eine begrenzte Verarbeitungszeit von ca. 1 bis 24 Stunden und werden entweder als solche (lösungsmittelfreie Klarlacke), vorzugsweise jedoch unter Mitverwendung der üblichen Hilfs- und Zusatzmittel verarbeitet. Diese gegebenenfalls mitzuverwendenden Hilfs- und Zusatzmittel können entweder dem Gemisch oder den Einzelkomponenten vor deren Durchmischung hinzugefügt werden.

Als Hilfs- und Zusatzmittel kommen beispielsweise Lösungsmittel in Betracht, wie z.B. Ethylacetat, n-Propylacetat, iso-Propylacetat, n-Butylacetat, n-Hexylacetat, n-Heptylacetat, 2-Ethylhexylacetat, Methoxypropylacetat, Methylethylketon, Methylisobutylketon, Toluol, Xylol, höhere Aromatengemische, Testbenzin oder beliebige Gemische dieser Lösungsmittel.

Weitere, gegebenenfalls mitzuverwendende Hilfs- und Zusatzmittel sind z.B. Weichmacher, wie z.B. Trikresylphosphat, Phthalsäurediester, Chlorparaffine; Pigmente und Füllstoffe, wie Titandioxid, Bariumsulfat, Kreide, Ruß; Katalysatoren, wie z.B. N,N-Dimethylbenzylamin, N-Methylmorpholin, Zinkoctoat, Zinn-II-octoat oder Dibutylzinndilaurat; Verlaufsmittel; Verdickungsmittel; gegebenenfalls Stabilisatoren, wie substituierte Phenole; organofunktionelle Silane als Haftvermittler sowie Lichtschutzmittel und UV-Absorber. Derartige Lichtschutzmittel sind beispielsweise sterisch gehinderte Amine, wie sie z.B. in DE-A 2 417 535 (entsprechend US-A 4 123 418 und US-A 4 110 304) und DE-A 2 456 864 (entsprechend US-A 3 993 655 und US-A 4 221 701) beschrieben sind. Besonders bevorzugte Verbindungen sind Bis-(1,2,2,6,6-pentamethylpiperidyl-4)-sebacat, Bis-(2,2,6,6-tetramethylpiperidyl-4)-sebacat und n-Butyl-(3,5-di-tert.-butyl-4-hydroxybenzyl)-malonsäure-bis-(1,2,2,6,6-pentamethylpiperidyl-4)-ester.

Die den Füllstoffen und Pigmenten anhaftende Feuchtigkeit kann durch vorhergehende Trocknung oder durch Mitverwendung von wasseraufnehmenden Stoffen, wie z.B. Molekularsieb-Zeolithen, entfernt werden.

Die Trocknung, der bei der erfindungsgemäßen Verwendung resultierenden Lackfilme kann bei Verwendung von Blockierungsmittel-freien Polyisocyanaten als Vernetzer bei Raumtemperatur erfolgen und bedarf keiner wesentlichen Temperaturerhöhung, um die eingangs erwähnten, optimalen Eigenschaften zu erreichen. Bei Anwendung der Bindemittel als Reparaturlack ist jedoch oftmals eine Temperaturerhöhung auf ca. 60 bis 100°C, vorzugsweise 60 bis 80°C, während eines Zeitraumes von 20 bis 60 Minuten empfehlenswert, um die Trocknungs- und Härtungszeit zu verkürzen. Bei Verwendung von blockierten Polyisocyanaten bzw. den anderen zuvor genannten Produktgruppen als Vernetzer müssen für die Trocknung bzw. Härtung der Lackfilme höhere Temperaturen von beispielsweise 100 bis 240°C, vorzugsweise 110 bis 220°C und besonders bevorzugt 120 bis 180°C angewendet werden.

Im applikationsfertigen Zustand zeichnen sich die Lacke auf Basis der erfindungsgemäßen Bindemittelkombinationen durch einen hohen Festkörper- bzw. einen geringen Lösemittelgehalt aus. Die nach Aushärtung resultierenden Lackfilme haben eine hohe Härte, eine gute Elastizität, eine ausgezeichnete Witterungs-, Lösemittelund Chemikalienbeständigkeit sowie einen hohen Glanz. Die Härtungszeiten sowohl für die physikalische Antrocknung als auch die chemische Vernetzung sind kurz, so dass entsprechend beschichtete Gebrauchsgegenstände sehr schnell gegenüber Lösemitteln und Chemikalien resistent sind und in Gebrauch genommen werden können.

Die erfindungsgemäß zum Einsatz gelangenden Lacke eignen sich daher vor allem für die Lackierung von Großfahrzeugen, wie z.B. Flugzeuge, Eisenbahn- und Straßenbahnwaggons, LKW-Aufbauten und dgl. Ein weiteres bevorzugtes Einsatzgebiet besteht in ihrer Verwendung als Autoreparaturlack. Weiterhin geeignet sind die Lacke für Korrosionsschutzanwendungen, wie z.B. die Beschichtung von Brücken und Strommasten, für die allgemeine Industrie-, Holz- und Möbellackierung und für die Autoerstlackierung.

Die Applikation der erfindungsgemäßen Lacke erfolgt nach üblichen Methoden, beispielsweise durch Spritzen, Gießen, Tauchen, Streichen, Sprühen oder Walzen. Die erfindungsgemäßen Lacke eignen sich sowohl zur Herstellung von Grundierungen als auch zur Herstellung von Zwischenschichten und insbesondere zur Herstellung von Deckschichten auf den zu lackierenden Substraten.

### Beispiele

Die nachfolgenden Beispiele dienen zur weiteren Erläuterung der Erfindung. Alle Prozentangaben beziehen sich, falls nicht anders vermerkt, auf das Gewicht.

### Beispiel 1

### Allgemeine Herstellvorschrift für die erfindungswesentlichen Pfropfcopolymerisate A1 bis A6 und die Vergleichsprodukte V1 bis V3

In einem 5-1-Edelstahldruckreaktor mit Rührer, Destillationseinrichtung, Vorlagebehälter für Monomermischung und Initiator inklusive Dosierpumpen sowie automatischer Temperaturregelung wird Teil I vorgelegt und auf die gewünschte Polymerisationstemperatur (bei den Beispielen 190°C) aufgeheizt. Dann werden durch separate Zuläufe gemeinsam beginnend Teil II (Monomermischung) in 3 Stunden und Teil III (Initiator) in 3,5 Stunden zudosiert, wobei die Polymerisationstemperatur nahezu (± 2°C) konstant gehalten wird. Anschließend wird 60 Minuten bei der Polymerisationstemperatur nachgerührt. Dann wird auf Raumtemperatur abgekühlt und der Festgehalt bestimmt. Die Pfropfcopolymerisate sollten einen Festgehalt von 75 ± 1 % haben. Bei einem Festgehalt von ≤ 73 % wird mit 5 % der ursprünglichen Initiatormenge bei 150°C 30 Minuten nachaktiviert. Bei einem Festgehalt zwischen 73 und 74 % wird auf 75 ± 1 % andestilliert. Danach wird das Pfropfcopolymerisat über einen Filter (Seitz Supra 5500) filtriert. Die Zusammensetzungen der Teile I bis III sowie die Kenndaten der erhaltenen Produkte sind in Tabelle I aufgeführt.

### Beispiel 2

### Nachstellung des Copolymers 2 der EP-A 638 591 als Vergleichsbeispiel V4

Gemäß der Herstellvorschrift und der Zusammensetzung wurde das Copolymerisat 2 der EP-A 638591 exakt nachgestellt. Es wurde ein Produkt mit folgenden Kenndaten erhalten:

| | |
|---|---|
| Festgehalt: | 74,2 % |
| Viskosität bei 23°C: | 8450 mPa.s |
| Säurezahl, Lff./FH¹⁾: | 7,5 / 10,1 |
| Hydroxylzahl, Lff./FH¹⁾: | 109 / 147 |
| Hazen-Farbzahl: | 65 APHA |
| Aussehen: | klar |

### Beispiel 3

### Nachstellung des Copolymers A3 der EP A 778298 als Vergleichsbeispiel V5

Gemäß der Herstellvorschrift und der Zusammensetzung wurde das Copolymerisat A3 der EP A 778298 exakt nachgestellt. Es wurde ein Produkt mit folgenden Kenndaten erhalten:

| | |
|---|---|
| Festgehalt: | 74,7 % |
| Viskosität bei 23°C: | 6180 mPa.s |
| Säurezahl, Lff.IFH¹⁾: | 12,1 / 16,2 |
| Hydroxylzahl, Lff./FH¹⁾: | 98 / 131 |
| Hazen-Farbzahl: | 60 APHA |
| Aussehen: | klar |

| | |
|---|---|
| ¹⁾ Lff.: Lieferform FH: Festharz | |

**Tabelle 1: Zusammensetzungen und Kenndaten der erfindungswesentlichen Pfropfcopolymerisate A1 bis A6 und der Vergleichsprodukte V1 bis V3**

| **Copolymerisat** | **A1** | **A2** | **A3** | **A4** | **A5** | **A6** | **V1** | **V2** | **V3** |
|---|---|---|---|---|---|---|---|---|---|
| **Zusammensetzung** | | | | | | | | | |
| Teil 1 | | | | | | | | | |
| Butylacetat | 21,00 | 21,00 | 21,00 | 21,00 | 21,00 | 21,00 | 21,00 | 21,00 | 21,00 |
| | | | | | | | | | |

| Teil 2 | | | | | | | | | |
|---|---|---|---|---|---|---|---|---|---|
| Styrol | 22,80 | 22,80 | 22,80 | 22,80 | 15,20 | 15,20 | 22,80 | 22,80 | 22,80 |
| HEMA | 22,80 | 22,80 | 22,80 | 22,80 | 22,80 | 22,80 | 22,80 | 22,80 | 22,80 |
| Ethylacrylat | 10,64 | - | - | - | 14,44 | 6,84 | 11,40 | - | - |
| Butylacrylat | - | 10,64 | - | - | - | - | - | 11,40 | - |
| Butylmethacrylat | - | - | 10,64 | - | - | - | - | - | 11,40 |
| Methylmethacrylat | - | - | - | - | - | 7,60 | - | - | - |
| Isobornylacrylat | 15,20 | 15,20 | 15,20 | 25,84 | 19,00 | 15,20 | 15,20 | 15,2 | 15,2 |
| Polybutadien ^{®}Nisso B 1000¹⁾ | 0,76 | 0,76 | 0,76 | 0,76 | 0,76 | 0,76 | - | - | - |
| Acrylsäure | 0,76 | 0,76 | 0,76 | 0,76 | 0,76 | 0,76 | 0,76 | 0,76 | 0,76 |
| | | | | | | | | | |

| Teil 3 | | | | | | | | | |
|---|---|---|---|---|---|---|---|---|---|
| Di-tert.-butylperoxid | 3,04 | 3,04 | 3,04 | 3,04 | 3,04 | 3,04 | 3,04 | 3,04 | 3,04 |
| Butylacetat | 3,00 | 3,00 | 3,00 | 3,00 | 3,00 | 3,00 | 3,00 | 3,00 | 3,00 |
| | | | | | | | | | |

| **Kenndaten** | | | | | | | | | |
|---|---|---|---|---|---|---|---|---|---|
| Festgehalt, % | 75,3 | 75,2 | 75,2 | 75,1 | 75,6 | 75,2 | 75,6 | 75,6 | 75,8 |
| Viskosität bei 23°C, mPa.s | 5190 | 3500 | 2920 | 5880 | 4950 | 4500 | 3750 | 2860 | 2520 |
| Säurezahl, Lff., mg KOH/g | 7,9 | 8,7 | 7,8 | 8,0 | 7,9 | 8,3 | 8,4 | 7,9 | 8,8 |
| OH-Zahl, Lff. mg KOH/g | 95 | 96 | 96 | 96 | 95 | 96 | 95 | 95 | 97 |
| OH-Gehalt, FH, % | 3,85 | 3,9 | 3,9 | 3,9 | 3,8 | 3,9 | 3,8 | 3,8 | 3,9 |
| Farbzahl, APHA | 15 | 10 | 10 | 5 | 30 | 40 | 10 | 10 | 15 |

| | | | | | | | | | |
|---|---|---|---|---|---|---|---|---|---|
| ¹⁾Handelsprodukt der Nippon Soda | | | | | | | | | |

### Beispiel 4 (Verwendung)

Dieses Beispiel beschreibt die Herstellung gebrauchsfertiger Lacke auf Basis der Polyacrylatpolyole A1 bis A6 und V1 bis V5, deren Applikation und die Prüfung der resultierenden Lackfilme.

Zur Beurteilung der allgemeinen Lackeigenschaften wurden Klarlacke hergestellt. Dazu wurden die Polyole A1 bis A6 sowie V1 bis V5 mit einem Lackpolyisocyanat versetzt, wobei ein NCO/OH-Verhältnis von ca. 1 : 1 eingehalten wurde. Als Lackpolyisocyanat diente ^{®}Desmodur N 3390, ein Isocyanuratgruppen enthaltendes Polyisocyanat auf Basis 1,6-Diisocyanatohexan, 90%ig gelöst in Butylacetat/Solvent Naphtha 100 (1 : 1); NCO-Gehalt der Lösung: ca. 19,4 Gew.-%, Gehalt der Lösung an freiem 1,6-Diisocyanatohexan: unter 0,5 %. Bezogen auf Festharz (Summe der festen Anteile an Polyol und Polyisocyanat) wurden folgende Anteile an Zusatzstoffen verwendet.

| Bestandteile | Gew.-% fest auf fest |
|---|---|
| Dabco^{®} 33 LV (PUR-Katalysator von Air Products, 10 %ig in Butylacetat) | 0,3 |
| BYK^{®} 331 (Verlaufsmittel der BYK-Chemie, 50 %ig in Butylacetat) | 0,3 |
| Tinuvin^{®} 1130 (UV-Absorber der Ciba Geigy, Basel, 50 %ig in Xylol) | 2,0 |
| Tinuvin^{®} 292 (Lichtschutzmittel der Ciba Geigy, Basel, 50 %ig in Xylol) | 1,0 |

Als Lösemittel wurde ein Gemisch aus Methoxypropylacetat, Xylol und n-Butylacetat (1 : 1 : 1) verwendet. Es wurde eingestellt auf einen Gehalt von:
ca. 56 Gew.-% Bindemittel,
ca. 2 Gew.-% Additive,
ca. 42 Gew.-% Lösemittel

Die Auslaufzeit (DIN 53 211, 4-mm-Düse) lag zwischen 20 und 26 s. Damit sind die Lacke spritzfertig weitgehend eingestellt und besitzen nun einen VOC-Wert (volatile organic compounds) von 3,5 lbs/gal, das entspricht 420 g Lösemittel pro 1 kg Lack.

Mit dem Lack auf Basis von V4 konnte nur ein Auslaufzeit von 26 s und mit dem Lack von V5 eine Auslaufzeit von 24 s erzielt werden bei einem Anteil von 42 Gew.-% Lösemittel. Diese Auslaufzeiten sind an sich schon zu hoch für die Applikation und verdeutlichen damit, dass mit diesen Lacken ein VOC-Wert von 3,5 lbs/gal bei 20 s Auslaufzeit nicht erreicht werden kann.

Die Lacke wurden auf Glasplatten aufgezogen, sowohl bei Raumtemperatur als auch 30 Minuten bei 60°C getrocknet, wobei die Trocknungsgeschwindigkeit (DIN 53 150) ermittelt wurde, und dann 7 Tage bei Raumtemperatur gelagert. Die Trockenfilmdicke betrug ca. 40 bis 50 µm.

Anschließend wurde die Härte nach König (DIN 53 157), der Glanz nach Gardner im 60°-Winkel (DIN 67 530) und die Anlösbarkeit durch Superbenzin (nach 1, 2, 3 und 4 Tagen Lagerung bei Raumtemperatur) geprüft. Die Erichsentiefung wurde an entsprechend beschichteten Prüfblechen ermittelt.

Außerdem wurde die Vergilbungsresistenz bei Bestrahlung mit kurzwelligem UV-Licht im QUV-Test (QUV-Accelerated Weathering Tester, ASTM G 53-77) geprüft. Hierzu wurden auf Aluminiumbleche (68 mm × 150 mm), die zuvor grundiert und mit weißem Basislack beschichtet wurden, Klarlacke auf Basis der Polyole A 1 bis A 6 und V1 bis V5 appliziert. Nach Applikation und Trocknung der Lacke (30 Minuten bei 60°C), wurden diese 7 Tage bei Raumtemperatur gelagert und anschließend im QUV-Gerät (Fa. Q-Panel Company) geprüft. Dabei wurde im Zyklus jeweils 4 h im intensiven, ungefilterten UV-Licht im Wellenlängenbereich von ca. 280 bis 370 nm (Maximum bei 313 nm) bestrahlt bzw. 4 h im Dunkeln belassen, bei einer Gesamtdauer von 1.000 h. Nach dem Abwaschen der Probe wurde mittels eines Farbmeßgerätes die Gesamtfarbdifferpnz ΔE (gegenüber der nicht bewitterten Platte) als Maß für die aufgetretene Vergilbung bestimmt.

Die Prüfergebnisse von Lacken auf Basis der Copolymerisate A1 bis A6 und V1 bis V5 sind in Tabelle 2 dargestellt.

**Tabelle 2: Prüfergebnisse von 2K-PUR-Klarlacken auf Basis der erfindungsgemäßen Polyole A1 bis A6 und der Vergleichspolyole V1 bis V5**

| Lack auf Basis von Polyol | A1 | A2 | A3 | A4 | A5 | A6 | V1 | V2 | V3 | V4 | V5 |
|---|---|---|---|---|---|---|---|---|---|---|---|
| Trocknung¹⁾ bei RT | | | | | | | | | | | |
| T1 (Minuten) | 60 | 70 | 65 | 50 | 55 | 60 | 85 | 95 | 90 | 120 | 80 |
| T3 (Stunden) | 6,0 | 6,5 | 6,0 | 5,5 | 5,5 | 6,0 | 7,0 | 7,5 | 7,0 | 8,0 | 6,5 |

| Pendeldämpfung | | | | | | | | | | | |
|---|---|---|---|---|---|---|---|---|---|---|---|
| 23°C + 7d RT (s) | 145 | 133 | 157 | 175 | 170 | 152 | 133 | 125 | 141 | 148 | 160 |
| 30'60°C + 7 d RT (s) | 182 | 175 | 188 | 214 | 203 | 180 | 174 | 162 | 177 | 196 | 188 |

| Superbenzinfestigkeit²⁾ | | | | | | | | | | | |
|---|---|---|---|---|---|---|---|---|---|---|---|
| 23°C + 1 d RT, 1 Min./5 Min. | 0/0 | 0/1 | 0/1 | 0/0 | 0/0 | 0/0 | 1/2 | 1-2/3 | 1-2/3 | 2/4 | 0/1 |
| 23°C + 2 d RT, 1 Min./5 Min. | - | 0/0 | 0/0 | - | - | - | 0/1 | 0-1/1 | 0-1/1 | 1/3 | 0/0 |
| 23°C + 3 d RT, 1 Min./5 Min. | - | - | - | - | - | - | 0/0 | 0/0 | 0/0 | 0/1 | - |
| 23°C + 4 d RT, 1 Min./5 Min. | - | - | - | - | - | - | - | - | - | 0/0 | - |
| Erichsentiefung (mm) | 10,5 | 11,0 | 10,5 | 10,5 | 11,0 | 10,5 | 11,0 | 10,5 | 10,5 | 10,5 | 10,0 |
| QUV-Test (ΔE) 250 h / 1.000 h | 3,0 / 5,5 | 3,1 / 5,7 | 2,9 / 5,8 | 3,0 / 5,5 | 3,1 / 5,8 | 3,1 / 5,7 | 3,0 / 5,1 | 3,1 / 5,6 | 3,0 / 5,7 | 3,7 / 6,1 | 3,2/5,8 |
| Glanz³⁾ (∠ 60°) | 96 / 95 | 95 / 94 | 95 / 95 | 96 / 94 | 95 / 94 | 95 / 94 | 96 / 94 | 95 / 94 | 95 / 94 | 93 / 91 | 90 / 89 |

| | | | | | | | | | | | |
|---|---|---|---|---|---|---|---|---|---|---|---|
| ¹⁾ T1 Sandtrocknung, T3 Durchtrocknung (DIN 53 150) ²⁾ 0 = bester Wert (ohne Befund), 5 = schlechtester Wert (Lackfilm an der belasteten Stelle vollständig aufgelöst) ³⁾ Vor und nach dem QUV-Test (0 h / 1000 h) | | | | | | | | | | | |

### Diskussion der Resultate

2K-PUR-Klarlacke auf Basis der Polyole A1 bis A6 haben trotz des hohen Festkörpergehaltes bei Applikation eine schnelle Trocknung bei Raumtemperatur und sind schon nach 1 bis 2 Tagen beständig gegen die Einwirkung von Superbenzin. Glanz, Elastizität und Filmhärte liegen auf hohem Niveau, vergleichbar mit heutigen Standardsystemen, die einen wesentlich geringeren Festgehalt bei Applikation haben. Verglichen mit den Lacken der Polyole A1 bis A6 haben dagegen die Lacke der Polyole V1 bis V3 eine längere Trocknungszeit und nach einem Tag eine schlechte Superbenzinfestigkeit, die nach 2 Tagen besser wird und erst nach 3 Tagen in Ordnung ist. Der Lack auf Basis des Polyols V4 hat eine langsame Trocknung und nach einem Tag eine schlechte Superbenzinfestigkeit, die nach 2 und 3 Tagen besser wird und erst nach 4 Tagen in Ordnung ist. Der Lack auf Basis des Vergleichspolyols V5 hat zwar eine gute Benzinfestigkeit, aber die Trocknung ist langsamer als bei den erfindungsgemäßen Lacken. Die Prüfergebnisse zeigen somit deutlich, dass festkörperreiche 2K-PUR-Klarlacke auf Basis der erfindungsgemäßen Polyole A1 bis A6 sowohl eine sehr schnelle Trocknung als auch eine sehr gute Benzinbeständigkeit aufweisen und dass damit lackierte Gebrauchsgegenstände, vorzugsweise Kraftfahrzeuge, schon nach kürzester Zeit ihrer gebrauchsmäßigen Bestimmung zugeführt werden können.

## Patentansprüche

1. Bindemittelkombination, bestehend aus
A) 90 bis 50 Gew.-% OH-funktioneller Pfropfcopolymerisatharze mit einem Hydroxylgruppengehalt von 1,07 bis 8,51 Gew.-%, hergestellt durch Copolymerisation von
a) 0,1 bis 10 Gew.-% mindestens eines gegebenenfalls funktionellen Polybutadiens mit einem Molekulargewicht von 500 bis 10.000 und mit mindestens 20 % 1,2-Vinylstruktur,
b) 5 bis 60 Gew.-% mindestens eines ungesättigten, aromatischen Monomeren,
c) 10 bis 50 Gew.-% mindestens eines Hydroxyalkylesters der Acryl- bzw. Methacrylsäure mit 2 bis 4 Kohlenstoffatomen im Hydroxyalkylrest und primär gebundener Hydroxylgruppe,
d) 5 bis 70 Gew.-% mindestens eines cycloaliphatischen Esters der Acryl und/oder Methacrylsäure mit bis zu 12 Kohlenstoffatomen im Cycloalkylrest,
e) 5 bis 50 Gew.-% mindestens eines aliphatischen Esters der Acryl- und/oder Methacrylsäure mit 1 bis 8 Kohlenstoffatomen im Alkoholrest,
f) 0,1 bis 5 Gew.-% mindestens einer α,β-monoolefinisch ungesättigten Mono- oder Dicarbonsäure mit 3 bis 7 Kohlenstoffatomen und/oder mindestens eines Maleinsäure- bzw. Fumarsäurehalbesters mit 1 bis 14 Kohlenstoffatomen im Alkoholrest und
g) 0 bis 40 Gew.-% weiteren copolymerisierbaren, olefinisch ungesättigten Verbindungen mit bis zu 10 Gew.-% Hydroxypropylmethacrylat und
B) 10 bis 50 Gew.-% eines mehrfach funktionellen Vernetzers oder Vernetzergemischs,
wobei jeweils die Summe der Gew.-% der Komponenten A) und B) sowie die Summe der Gew.-% der Komponenten a) bis g) 100 beträgt.

2. Bindemittelkombinationen nach Anspruch 1, **dadurch gekennzeichnet, dass** die Pfropfcopolymerisate A) bestehen aus:
a) 0,2 bis 8 Gew.-% eines oder mehrerer, gegebenenfalls funktioneller Polybutadiene mit einem Molekulargewicht von 500 bis 5000 und mindestens 30 % 1,2-Vinylstruktur,
b) 10 bis 40 Gew.-% Styrol,
c) 15 bis 45 Gew.-% Hydroxyethylacrylat, Hydroxyethylmethacrylat, Butandiol-1,4-monoacrylat oder deren Mischungen,
d) 10 bis 50 Gew.-% mindestens eines cycloaliphatischen Esters der Acryl- und/oder Methacrylsäure mit bis zu 12 Kohlenstoffatomen in der Alkoholkomponente,
e) 10 bis 40 Gew.-% mindestens eines aliphatischen Esters der Acrylund/oder Methacrylsäure mit 1 bis 8 Kohlenstoffatomen im Alkoholrest,
f) 0,3 bis 4 Gew.-% Acrylsäure, Methacrylsäure, Maleinsäure- oder Fumarsäurehalbester mit 1 bis 8 Kohlenstoffatomen in der Alkoholkomponente oder deren Mischungen und
g) 0 bis 25 Gew.-% Acrylnitril, Methacrylnitril, Hydroxypropyl(meth)-acrylat (bis 10 Gew.-%), Vinylester aliphatischer, gegebenenfalls verzweigter Monocarbonsäuren mit 1 bis 10 Kohlenstoffatomen im Säurerest, Di(cyclo)alkylester der Malein- und/oder Fumarsäure mit bis zu 8 Kohlenstoffatomen im Alkoholrest oder deren Mischungen,
wobei die Summe der Gew.-% der Komponenten a) bis g) 100 beträgt.

3. Bindemittelkombinationen nach Anspruch 1, **dadurch gekennzeichnet, dass** die Pfropfcopolymerisate A) bestehen aus:
a) 0,3 bis 7,5 Gew.-% eines oder mehrerer, gegebenenfalls funktioneller, Polybutadiene mit einem Molekulargewicht von 500 bis 3.000 und mindestens 40 % 1,2-Vinylstruktur,
b) 15 bis 35 Gew.-% Styrol,
c) 20 bis 40 Gew.-% Hydroxyethylacrylat, Hydroxyethylmethacrylat oder deren Mischungen,
d) 15 bis 45 Gew.-% Isobornylacrylat, Isobornylmethacrylat, Cyclohexyl-(meth)acrylat, 3,5,5-Trimethylcyclohexyl(meth)acrylat, 4-tert-Butylcyclohexyl(meth)acrylat oder deren Mischungen,
e) 10 bis 40 Gew.-% mindestens eines aliphatischen Esters der Acrylund/oder Methacrylsäure mit 1 bis 8 Kohlenstoffatomen in der Alkoholkomponente,
f) 0,5 bis 3 Gew.-% Acrylsäure, Methacrylsäure oder deren Mischungen
und
g) 0 bis 20 Gew.-% Hydroxypropyl(meth)acrylat (bis 10 Gew.-%), Vinylester aliphatischer, gegebenenfalls verzweigter Monocarbonsäuren mit 1 bis 10 Kohlenstoffatomen im Säurerest, Di(cyclo)alkylester der Malein- und/oder Fumarsäure mit bis zu 8 Kohlenstoffatomen im Alkoholrest oder deren Mischungen,
wobei die Summe der Gew.-% der Komponenten a) bis g) 100 beträgt.

4. Bindemittelkombinationen nach Anspruch 1, **dadurch gekennzeichnet, dass** die Pfropfcopolymerisate A) bestehen aus:
a) 0,4 bis 6 Gew.-% eines oder mehrerer, gegebenenfalls funktioneller, Polybutadiene mit einem Molekulargewicht von 500 bis 2.000 und mindestens 45 % 1,2-Vinylstruktur,
b) 15 bis 25 Gew.-% Styrol,
c) 25 bis 35 Gew.-% Hydroxyethylacrylat, Hydroxyethylmethacrylat oder deren Mischungen,
d) 20 bis 30 Gew.-% Isobornylacrylat
e) 15 bis 25 Gew.-% mindestens eines aliphatischen Esters der Acrylund/oder Methacrylsäure mit 1 bis 4 Kohlenstoffatomen in der Alkoholkomponente,
f) 0,5 bis 2 Gew.-% Acrylsäure, Methacrylsäure oder deren Mischungen
und
g) 0 bis 10 Gew.-% Hydroxypropyl(meth)acrylat (bis 5 Gew.-%), Vinylester aliphatischer, gegebenenfalls verzweigter Monocarbonsäuren mit 1 bis 9 Kohlenstoffatomen im Säurerest, Di(cyclo)alkylester der Malein- und/oder Fumarsäure mit bis zu 6 Kohlenstoffatomen im Alkoholrest oder deren Mischungen,
wobei die Summe der Gew.-% der Komponenten a) bis g) 100 beträgt.

5. Bindemittelkombinationen nach Anspruch 1 bis 4, **dadurch gekennzeichnet, dass** das mehrfach funktionelle Vernetzerharz B) ein Aminoplastharz ist.

6. Bindemittelkombinationen nach Anspruch 1 bis 4, **dadurch gekennzeichnet, dass** das mehrfach funktionelle Vernetzerharz B) ein alkoxyliertes Melaminharz, ein Melamin-Formaldehyd-Kondensationsprodukt, ein Harnstoff harz, ein Guanidinharz oder eine Mischung daraus ist.

7. Bindemittelkombinationen nach Anspruch 1 bis 4, **dadurch gekennzeichnet, dass** das mehrfach funktionelle Vernetzerharz B) ein Phenolharz, ein Resolharz oder eine Mischung daraus ist.

8. Bindemittelkombinationen nach Anspruch 1 bis 4, **dadurch gekennzeichnet, dass** das mehrfach funktionelle Vernetzerharz B) ein Polyisocyanat und/oder eine Polyisocyanatmischung ist.

9. Bindemittelkombinationen nach Anspruch 1 und 8, **dadurch gekennzeichnet, dass** das mehrfach funktionelle Vernetzerharz B) ein (cyclo)aliphatisches Polyisocyanat mit freien Isocyanatgruppen und mit Biuret-, Allophanat-, Uretdion-, Urethan-, Isocyanuratstruktur und/oder Iminooxadiazindionstruktur und/oder eine Mischung solcher Polyisocyanate ist.

10. Bindemittelkombination nach Anspruch 1 bis 4 und 8, **dadurch gekennzeichnet, dass** das mehrfach funktionelle Vernetzerharz B) 4-Isocyanatomethyl-1,8-octandiisocyanat ist.

11. Bindemittelkombinationen nach Anspruch 1 bis 4, **dadurch gekennzeichnet, dass** das mehrfach funktionelle Vernetzerharz B) aus einer Mischung von 4-Isocyanatomethyl-1,8-octandiisocyanat und mindestens einem (cyclo)aliphatischen Polyisocyanat mit freien Isocyanatgruppen und mit Biuret-, Allophanat-, Uretdion-, Urethan-, Isocyanuratstruktur und/oder Iminooxadiazindionstruktur besteht.

12. Bindemittelkombination nach Anspruch 1 bis 4 und 8, **dadurch gekennzeichnet, dass** das mehrfach funktionelle Vernetzerharz B) mindestens ein (cyclo)aliphatisches Polyisocyanat mit blockierten Isocyanatgruppen ist.

13. Verwendung von Lacken enthaltend Bindemittelkombinationen nach Anspruch 1 bis 12 zur Beschichtung von Oberflächen.

14. Verwendung von Bindemittelkombinationen nach Anspruch 1 bis 12 zur Beschichtung von Kraftfahrzeugen und Kraftfahrzeugteilen.

15. Verwendung von Bindemittelkombinationen nach Anspruch 1 bis 12 in der Autoreparatur-, Großfahrzeug- und Autoerstlackierung.

16. Verwendung von Bindemittelkombinationen nach Anspruch 1 bis 12 im Korrosionsschutzbereich, in der allgemeinen Industrie-, Holz- und Möbellackierung.

17. Verwendung von Bindemittelkombinationen nach Anspruch 1 bis 12 zur Herstellung von Lacken.

## Claims

1. Binder combination consisting of
A) 90% to 50% by weight of OH-functional graft copolymer resins having a hydroxyl group content of 1.07% to 8.51% by weight, prepared by copolymerization of
a) 0.1% to 10% by weight of at least one optionally functional polybutadiene having a molecular weight of 500 to 10 000 and with at least 20% 1,2-vinyl structure,
b) 5% to 60% by weight of at least one unsaturated aromatic monomer,
c) 10% to 50% by weight of at least one hydroxyalkyl ester of acrylic and/or methacrylic acid having 2 to 4 carbon atoms in the hydroxyalkyl radical and primary-attached hydroxyl group,
d) 5% to 70% by weight of at least one cycloaliphatic ester of acrylic and/or methacrylic acid having up to 12 carbon atoms in the cycloalkyl radical,
e) 5% to 50% by weight of at least one aliphatic ester of acrylic and/or methacrylic acid having 1 to 8 carbon atoms in the alcohol residue,
f) 0.1% to 5% by weight of at least one α,β-monoolefinically unsaturated monocarboxylic or dicarboxylic acid having 3 to 7 carbon atoms, and/or of at least one maleic and/or fumaric monoester having 1 to 14 carbon atoms in the alcohol residue, and
g) 0% to 40% by weight of further copolymerizable, olefinically unsaturated compounds with up to 10% by weight of hydroxypropyl methacrylate and
B) 10% to 50% by weight of a polyfunctional crosslinker or crosslinker mixture,
the sum of the % by weight of components A) and B) and also the sum of the % by weight of components a) to g) being in each case 100.

2. Binder combinations according to Claim 1, **characterized in that** the graft copolymers A) consist of:
a) 0.2% to 8% by weight of one or more optionally functional polybutadienes having a molecular weight of 500 to 5 000 and at least 30% 1,2-vinyl structure,
b) 10% to 40% by weight of styrene,
c) 15% to 45% by weight of hydroxyethyl acrylate, hydroxyethyl methacrylate, butane-1,4-diol monoacrylate or mixtures thereof,
d) 10% to 50% by weight of at least one cycloaliphatic ester of acrylic and/or methacrylic acid having up to 12 carbon atoms in the alcohol component,
e) 10% to 40% by weight of at least one aliphatic ester of acrylic and/or methacrylic acid having 1 to 8 carbon atoms in the alcohol residue,
f) 0.3% to 4% by weight of acrylic acid, methacrylic acid, maleic or fumaric monoesters having 1 to 8 carbon atoms in the alcohol component, or mixtures thereof, and
g) 0% to 25% by weight of acrylonitrile, methacrylonitrile, hydroxypropyl (meth)acrylate (up to 10% by weight), vinyl esters of aliphatic, optionally branched monocarboxylic acids having 1 to 10 carbon atoms in the acid radical, di(cyclo)alkyl esters of maleic and/or fumaric acid having up to 8 carbon atoms in the alcohol residue, or mixtures thereof,
the sum of the % by weight of components a) to g) being 100.

3. Binder combinations according to Claim 1, **characterized in that** the graft copolymers A) consist of:
a) 0.3% to 7.5% by weight of one or more optionally functional polybutadienes having a molecular weight of 500 to 3 000 and at least 40% 1,2-vinyl structure,
b) 15% to 35% by weight of styrene,
c) 20% to 40% by weight of hydroxyethyl acrylate, hydroxyethyl methacrylate or mixtures thereof,
d) 15% to 45% by weight of isobornyl acrylate, isobornyl methacrylate, cyclohexyl (meth)acrylate, 3,5,5-trimethylcyclohexyl (meth)acrylate, 4-tert-butylcyclohexyl (meth)acrylate, or mixtures thereof,
e) 10% to 40% by weight of at least one aliphatic ester of acrylic and/or methacrylic acid having 1 to 8 carbon atoms in the alcohol component,
f) 0.5% to 3% by weight of acrylic acid, methacrylic acid or mixtures thereof, and
g) 0% to 20% by weight of hydroxypropyl (meth)acrylate (up to 10% by weight), vinyl esters of aliphatic, optionally branched monocarboxylic acids having 1 to 10 carbon atoms in the acid radical, di(cyclo)alkyl esters of maleic and/or fumaric acid having up to 8 carbon atoms in the alcohol residue, or mixtures thereof,
the sum of the % by weight of components a) to g) being 100.

4. Binder combinations according to Claim 1, **characterized in that** the graft copolymers A) consist of:
a) 0.4% to 6% by weight of one or more optionally functional polybutadienes having a molecular weight of 500 to 2 000 and at least 45% 1,2-vinyl structure,
b) 15% to 25% by weight of styrene,
c) 25% to 35% by weight of hydroxyethyl acrylate, hydroxyethyl methacrylate or mixtures thereof,
d) 20% to 30% by weight of isobornyl acrylate,
e) 15% to 25% by weight of at least one aliphatic ester of acrylic and/or methacrylic acid having 1 to 4 carbon atoms in the alcohol component,
f) 0.5% to 2% by weight of acrylic acid, methacrylic acid or mixtures thereof, and
g) 0% to 10% by weight of hydroxypropyl (meth)acrylate (up to 5% by weight), vinyl esters of aliphatic, optionally branched monocarboxylic acids having 1 to 9 carbon atoms in the acid radical, di(cyclo)alkyl esters of maleic and/or fumaric acid having up to 6 carbon atoms in the alcohol residue, or mixtures thereof,
the sum of the % by weight of components a) to g) being 100.

5. Binder combinations according to Claims 1 to 4, **characterized in that** the polyfunctional crosslinker resin B) is an amino resin.

6. Binder combinations according to Claims 1 to 4, **characterized in that** the polyfunctional crosslinker resin B) is an alkoxylated melamine resin, a melamine-formaldehyde condensation product, a urea resin, a guanidine resin or a mixture thereof.

7. Binder combinations according to Claims 1 to 4, **characterized in that** the polyfunctional crosslinker resin B) is a phenolic resin, a resole resin or a mixture thereof.

8. Binder combinations according to Claims 1 to 4, **characterized in that** the polyfunctional crosslinker resin B) is a polyisocyanate and/or a polyisocyanate mixture.

9. Binder combinations according to Claims 1 and 8, **characterized in that** the polyfunctional crosslinker resin B) is a (cyclo)aliphatic polyisocyanate having free isocyanate groups and with biuret, allophanate, uretdione, urethane, isocyanurate structure and/or iminooxadiazinedione structure and/or a mixture of such polyisocyanates.

10. Binder combination according to Claims 1 to 4 and 8, **characterized in that** the polyfunctional crosslinker resin B) is 4-isocyanatomethyl-1,8-octane diisocyanate.

11. Binder combinations according to Claims 1 to 4, **characterized in that** the polyfunctional crosslinker resin B) consists of a mixture of 4-isocyanatomethyl-1,8-octane diisocyanate and at least one (cyclo)aliphatic polyisocyanate having free isocyanate groups and with biuret, allophanate, uretdione, urethane, isocyanurate structure and/or iminooxadiazinedione structure.

12. Binder combination according to Claims 1 to 4 and 8, **characterized in that** the polyfunctional crosslinker resin B) is at least one (cyclo)aliphatic polyisocyanate having blocked isocyanate groups.

13. Use of coating materials comprising binder combinations according to Claims 1 to 12 for coating surfaces.

14. Use of binder combinations according to Claims 1 to 12 for coating motor vehicles and motor vehicle parts.

15. Use of binder combinations according to Claims 1 to 12 in automotive refinishing, large-vehicle finishing and automotive OEM finishing.

16. Use of binder combinations according to Claims 1 to 12 in the corrosion control area, in general industrial, wood and furniture coating.

17. Use of binder combinations according to Claims 1 to 12 for producing coating materials.

## Revendications

1. Association de liants, consistant en
A) 90 à 50 % en poids de résines de type copolymérisat greffé à fonction OH, ayant une teneur en groupes hydroxy de 1,07 à 8,51 % en poids, produites par copolymérisation de
a) 0,1 à 10 % en poids d'au moins un polybutadiène éventuellement fonctionnel, ayant une masse moléculaire de 500 à 10 000 et comportant au moins 20 % de structure 1,2-vinyle,
b) 5 à 60 % en poids d'au moins un monomère aromatique insaturé,
c) 10 à 50 % en poids d'au moins un ester hydroxyalkylique de l'acide acrylique ou de l'acide méthacrylique ayant de 2 à 4 atomes de carbone dans le radical hydroxyalkyle et à groupe hydroxy en liaison primaire,
d) 5 à 70 % en poids d'au moins un ester cycloaliphatique de l'acide acrylique et/ou de l'acide méthacrylique ayant jusqu'à 12 atomes de carbone dans le radical cycloalkyle,
e) 5 à 50 % en poids d'au moins un ester aliphatique de l'acide acrylique et/ou de l'acide méthacrylique ayant de 1 à 8 atomes de carbone dans le fragment alcool,
f) 0,1 à 5 % en poids d'au moins un acide mono- ou dicarboxylique à insaturation α,β-mono-oléfinique ayant de 3 à 7 atomes de carbone et/ou d'au moins un hémiester d'acide maléique ou fumarique ayant de 1 à 14 atomes de carbone dans le fragment alcool et
g) 0 à 40 % en poids d'autres composés à insaturation oléfinique copolymérisables, comportant jusqu'à 10 % en poids de méthacrylate d'hydroxypropyle et
B) 10 à 50 % en poids d'un agent de réticulation polyfonctionnel ou mélange de tels agents de réticulation,
La somme des % en poids des composants A) et B) ainsi que la somme des % en poids des composants a) à g) étant chacune égale à 100.

2. Associations de liants selon la revendication 1, **caractérisées en ce que** les copolymérisats greffés A) sont constitués de
a) 0,2 à 8 % en poids d'un ou plusieurs polybutadiènes éventuellement fonctionnels, ayant une masse moléculaire de 500 à 5 000 et comportant au moins 30 % de structure 1,2-vinyle,
b) 10 à 40 % en poids de styrène,
c) 15 à 45 % en poids d'acrylate d'hydroxyéthyle, de méthacrylate d'hydroxyéthyle, de 1,4-monoacrylate de butanediol ou de mélanges de ceux-ci,
d) 10 à 50 % en poids d'au moins un ester cycloaliphatique de l'acide acrylique et/ou de l'acide méthacrylique ayant jusqu'à 12 atomes de carbone dans le composant alcool,
e) 10 à 40 % en poids d'au moins un ester aliphatique de l'acide acrylique et/ou de l'acide méthacrylique ayant de 1 à 8 atomes de carbone dans le fragment alcool,
f) 0,3 à 4 % en poids d'acide acrylique, d'acide méthacrylique, d'hémiester d'acide maléique ou fumarique ayant de 1 à 8 atomes de carbone dans le composant alcool ou de mélanges de ceux-ci et
g) 0 à 25 % en poids d'acrylonitrile, de méthacrylonitrile, de (méth)acrylate d'hydroxypropyle (jusqu'à 10 % en poids), d'esters vinyliques d'acides monocarboxyliques aliphatiques, éventuellement ramifiés, ayant de 1 à 10 atomes de carbone dans le fragment acide, d'ester(s) di(cyclo)alkylique(s) de l'acide maléique et/ou de l'acide fumarique ayant jusqu'à 8 atomes de carbone dans le fragment alcool ou de mélanges de ceux-ci,
la somme des % en poids des composants a) à g) étant égale à 100.

3. Associations de liants selon la revendication 1, **caractérisées en ce que** les copolymérisats greffés A) sont constitués de
a) 0,3 à 7,5 % en poids d'un ou plusieurs polybutadiènes éventuellement fonctionnels, ayant une masse moléculaire de 500 à 3 000 et comportant au moins 40 % de structure 1,2-vinyle,
b) 15 à 35 % en poids de styrène,
c) 20 à 40 % en poids d'acrylate d'hydroxyéthyle, de méthacrylate d'hydroxyéthyle ou de mélanges de ceux-ci,
d) 15 à 45 % en poids d'acrylate d'isobornyle, de méthacrylate d'isobornyle, de (méth)acrylate de cyclohexyle, de (méth)acrylate de 3,5,5-triméthylcyclohexyle, de (méth)acrylate de 4-tert-butylcyclohexyle ou de mélanges de ceux-ci,
e) 10 à 40 % en poids d'au moins un ester aliphatique de l'acide acrylique et/ou de l'acide méthacrylique ayant de 1 à 8 atomes de carbone dans le composant alcool,
f) 0,5 à 3 % en poids d'acide acrylique, d'acide méthacrylique ou de mélanges de ceux-ci et
g) 0 à 20 % en poids de (méth)acrylate d'hydroxypropyle (jusqu_{'}à 10 % en poids), d'esters vinyliques d'acides monocarboxyliques aliphatiques, éventuellement ramifiés, ayant de 1 à 10 atomes de carbone dans le fragment acide, d'ester(s) di(cyclo)alkylique(s) de l'acide maléique et/ou de l'acide fumarique ayant jusqu'à 8 atomes de carbone dans le fragment alcool ou de mélanges de ceux-ci,
la somme des % en poids des composants a) à g) étant égale à 100.

4. Associations de liants selon la revendication 1, **caractérisées en ce que** les copolymérisats greffés A) sont constitués de
a) 0,4 à 6 % en poids d'un ou plusieurs polybutadiènes éventuellement fonctionnels, ayant une masse moléculaire de 500 à 2 000 et comportant au moins 45 % de structure 1,2-vinyle,
b) 15 à 25 % en poids de styrène,
c) 25 à 35 % en poids d'acrylate d'hydroxyéthyle, de méthacrylate d'hydroxyéthyle ou de mélanges de ceux-ci,
d) 20 à 30 % en poids d'acrylate d'isobornyle,
e) 15 à 25 % en poids d'au moins un ester aliphatique de l'acide acrylique et/ou de l'acide méthacrylique ayant de 1 à 4 atomes de carbone dans le composant alcool,
f) 0,5 à 2 % en poids d'acide acrylique, d'acide méthacrylique ou de mélanges de ceux-ci et
g) 0 à 10 % en poids de (méth)acrylate d'hydroxypropyle (jusqu'à 5 % en poids), d'esters vinyliques d'acides monocarboxyliques aliphatiques, éventuellement ramifiés, ayant de 1 à 9 atomes de carbone dans le fragment acide, d'ester(s) di(cyclo)alkylique(s) de l'acide maléique et/ou de l'acide fumarique ayant jusqu'à 6 atomes de carbone dans le fragment alcool ou de mélanges de ceux-ci,
la somme des % en poids des composants a) à g) étant égale à 100.

5. Associations de liants selon l'une quelconque des revendications 1 à 4, **caractérisées en ce que** la résine polyfonctionnelle en tant qu'agent de réticulation B) est une résine aminoplaste.

6. Associations de liants selon l'une quelconque des revendications 1 à 4, **caractérisées en ce que** la résine polyfonctionnelle en tant qu'agent de réticulation B) est une résine mélamine alcoxylée, un produit de condensation mélamine-formaldéhyde, une résine urée, une résine guanidine ou un mélange de telles résines.

7. Associations de liants selon l'une quelconque des revendications 1 à 4, **caractérisées en ce que** la résine polyfonctionnelle en tant qu'agent de réticulation B) est une résine phénolique, une résine résol ou un mélanges de telles résines.

8. Associations de liants selon l'une quelconque des revendications 1 à 4, **caractérisées en ce que** la résine polyfonctionnelle en tant qu'agent de réticulation B) est un polyisocyanate et/ou un mélange de polyisocyanates.

9. Associations de liants selon l'une quelconque des revendications 1 à 8, **caractérisées en ce que** la résine polyfonctionnelle en tant qu'agent de réticulation B) est un polyisocyanate (cyclo)aliphatique comportant des groupes isocyanate libres et à structure biuret, allophanate, urétdione, uréthane, isocyanurate et/ou structure imino-oxadiazinedione et/ou un mélange de tels polyisocyanates.

10. Associations de liants selon l'une quelconque des revendications 1 à 4 et 8, **caractérisées en ce que** la résine polyfonctionnelle en tant qu'agent de réticulation B) est le 4-isocyanatométhyl-1,8-octane-diisocyanate.

11. Associations de liants selon l'une quelconque des revendications 1 à 4, **caractérisées en ce que** la résine polyfonctionnelle en tant qu'agent de réticulation B) consiste en un mélange de 4-isocyanatométhyl-1,8-octanediisocyanate et d'au moins un polyisocyanate (cyclo)aliphatique comportant des groupes isocyanate libres et à structure biuret, allophanate, urétdione, uréthane, isocyanurate et/ou structure iminooxadiazinedione.

12. Associations de liants selon l'une quelconque des revendications 1 à 4 et 8, **caractérisées en ce que** la résine polyfonctionnelle en tant qu'agent de réticulation B) est au moins un polyisocyanate (cyclo)-aliphatique à groupes isocyanate bloqués.

13. Utilisation de peintures contenant des associations de liants selon l'une quelconque des revendications 1 à 12, pour le revêtement de surfaces.

14. Utilisation d'associations de liants selon l'une quelconque des revendications 1 à 12, pour le revêtement de véhicules automobiles et de parties de véhicules automobiles.

15. Utilisation d'associations de liants selon l'une quelconque des revendications 1 à 12 dans le peinturage de réparation d'automobiles, la première mise en peinture d'automobiles et de véhicules de grande taille.

16. Utilisation d'associations de liants selon l'une quelconque des revendications 1 à 12 dans le domaine de la protection contre la corrosion, dans le peinturage industriel général, de bois et de meubles.

17. Utilisation d'associations de liants selon l'une quelconque des revendications 1 à 12 pour la fabrication de peintures.
